# EUROPÄISCHE PATENTSCHRIFT

(11) **EP 0 814 999 B1**
(45) Veröffentlichungstag und Bekanntmachung des Hinweises auf die Patenterteilung: **01.08.2001**
(21) Anmeldenummer: 96903164.0
(22) Anmeldetag: 08.03.1996
(51) Int. Cl.: B62D 31/00

(54) **KRAFTFAHRZEUG**
MOTOR VEHICLE
VEHICULE A MOTEUR

(30) Priorität: 16.03.1995 CH 74895
(43) Veröffentlichungstag der Anmeldung: 07.01.1998
(73) Patentinhaber: RCC Regional Compact Car AG, 8700 Küsnacht (CH)
(72) Erfinder: WEBER, Albert, D-88677 Markdorf (DE)
(86) Internationale Anmeldenummer: IB9600180
(87) Internationale Veröffentlichungsnummer: WO9628336

(56) Entgegenhaltungen:
- WO-A-92/20563
- DE-A- 2 118 506
- DE-A- 4 314 452
- US-A- 2 997 332
- US-A- 4 842 326
- REVUE AUTOMOBILE, Bd. 87, Nr. 19, 7.Mai 1992, Seite 23 XP002001541 "LA BIGA D'ITALDESIGN"
- ENGINEERING. (INCL. MACHINE SHOP MAGAZINE), Bd. 198, Nr. 5145, 27.November 1964, Seite 684 XP002001542 "PUBLIC TRANSPORT AT THE TURN OF A KEY"

## Beschreibung

Die Erfindung betrifft ein Kraftfahrzeug.

Herkömmliche Kraftfahrzeuge weisen entweder eine grosse Aussenlänge kombiniert mit einer grossen Fahrzeugbreite oder eine kleine Aussenlänge kombiniert mit einer kleinen Aussenbreite auf. Beispiele solcher Dimensionen sind z.B. eine auf dem Markt erhältliche Luxuslimousine mit einer Länge von ca. 5,0 Metern, einer Breite von ca. 1,83 Metern und einer Höhe von 1,44 Metern (Lexus LS 400), bzw. ein auf dem Markt erhältlicher Kleinwagen mit den Abmessungen Länge ca. 3,31 Meter, Breite ca. 1,39 Meter und Höhe 1,44 Meter (Daihatsu cuore). Auch bei bekannten Elektromobilen und geplanten Kleinstwagen (Swatch-Mobil) bewegen sich die Aussenabmessungen in dem bekannten Schema, so dass die dort vorgesehene geringe Fahrzeuglänge auch mit einer geringen Fahrzeugbreite gekoppelt ist. Für den reinen Stadtverkehr mag ein solches Fahrzeug genügen; für den Regionalverkehr, der neben dem reinen Stadtbereich also auch Ueberlandverkehr und längere Fahrzeiten einschliesst, haben sich die bekannten Klein- und Kleinstwagenkonzepte nicht genügend durchsetzen können. Der Grund dafür liegt nicht zuletzt in deren geringen Platzangebot für Fahrer, Beifahrer und Gepäck.

In der DE-A-4314452 wird ein Fahrzeug mit quadratischer Grundfläche skizziert, bei dem der Motorraum und der Kofferraum ein unteres Deck und der hoch darüber liegende Fahrgastraum ein oberes Deck bilden. Eine solche Anordnung wäre jedoch sehr unstabil und daher auch nicht verkehrstauglich.

Der Erfindung liegt deshalb die Aufgabe zugrunde, ein Fahrzeug zu schaffen, das sowohl im Stadtverkehr die Vorteile eines Kleinstwagens aufweist als auch im Regionalverkehr ein hohes Passagier- und Gepäckvolumen bietet und welches sichere Fahreigenschaften aufweist.

Diese Aufgabe wird mit den kennzeichnenden Merkmalen des Anspruchs 1 gelöst.

Dadurch, dass das Fahrzeug mit einer geringen Länge aber einer grossen Breite versehen wird, die die Breite herkömmlicher Luxusfahrzeuge oder Grossraumfahrzeuge (Vans) erreicht oder sogar übersteigt wird das geometrische Problem auf günstige Weise gelöst. Ein solches Fahrzeug weist im Stadtverkehr durch eine geringe Länge die Vorteile eines Kleinstfahrzeuges auf, wobei die grosse Breite diesbezüglich keinen Nachteil bietet. Durch die grosse Breite und die damit vorhandene grosse Grundfläche lässt sich aber ein komfortables Platzangebot realisieren, was das Fahrzeug für den Regionalverkehr und sogar für Langstrecken ohne wesentliche Komforteinbusse gegenüber herkömmlichen Mittel- und Oberklassefahrzeugen tauglich macht.

Die Kombination von steifer Doppelbodenstruktur mit Fahrzeugaggregaten im doppelten Boden und mit dem leichten Fahrzeugaufbau einer mit Kunststoffteilen beplankten Rahmenkonstruktion ergibt eine leichte, steife und feste Struktur und gute passive Sicherheit sowie eine tiefe Schwerpunktlage mit breiter Standfläche und damit auch sicheren Fahreigenschaften.

Vorzugsweise ist auch die Höhe gegenüber herkömmlichen Kleinwagen erhöht und liegt annähernd im Bereich der Breite.

Weiter ist es bevorzugt, wenn der Raum zwischen Fahrzeugunterboden und Passagierraumboden als Gepäckraum und/oder als Raum für den Motor samt Nebenaggregaten und/oder für den Treibstofftank bzw. für Batterien genutzt wird.

Weitere Vorteile werden anhand der Zeichnungen erläutert, welche schematisch Ausführungsbeispiele der Erfindung zeigen. Dabei zeigt
Figur 1 ein erstes Beispiel des Fahrzeugs in Seiten-, Frontal- und Draufsicht mit lediglich als Beispiel zu verstehenden Massangaben;
Figur 2 entsprechende Ansichten eines als Lieferwagen ausgebildeten Fahrzeugs;
Figur 3 entsprechende Ansichten eines als Pick-up ausgebildeten Fahrzeugs; und
Figur 4 vier Seitenansichten eines Cabriolets mit vier verschiedenen Varianten des zur Oeffnung bestimmten Dachteiles.

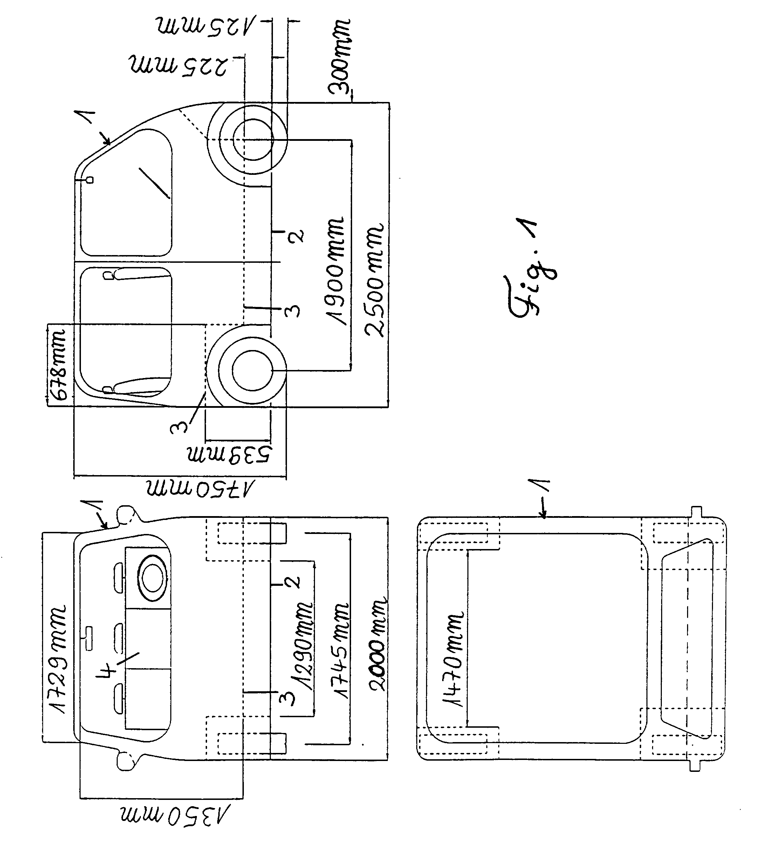

Figur 1 zeigt als Beispiel eine erste Ausführungsform des Fahrzeugs. Es ist ersichtlich, dass dies eine sogenannte 1-Volumen-Karosserie aufweist und eine Länge von 2,5 Metern. Die Fahrzeugbreite liegt im Bereich der Länge und beträgt im gezeigten Beispiel 2,0 Meter ohne die Rückspiegel bzw. ca. 2,3 Meter mit den Rückspiegeln. Die Fahrzeughöhe liegt annähernd im Bereich der Fahrzeugbreite und beträgt im gezeigten Beispiel 1,75 Meter. Das Fahrzeug 1 weist einen doppelten Boden auf, der von einer unteren Bodenplatte 2, welche den Unterboden des Fahrzeugs bildet und von einer inneren, allenfalls auch abgestuften Bodenplatte 3 gebildet wird, welche den Boden des Passagierraums bildet. Der Raum zwischen den beiden Bodenplatten 2, 3 kann auf verschiedene Weise von hinten, von vorne oder seitlich zugänglich sein. Insbesondere bildet dieser Raum im Heckbereich des Fahrzeugs und allenfalls sich bis nach vorne erstreckend einen Gepäckraum. Im Vorderbereich des Fahrzeugs ist in diesem Raum das Antriebsaggregat angeordnet. Durch die Breite des Fahrzeugs ergibt sich auch bei der geringen Länge einerseits ein grosser Passagierraum, was in der Zeichnung durch die drei nebeneinander angeordneten Passagiersitze 4 dargestellt ist. Natürlich können auch nur zwei Sitze nebeneinander positioniert werden. Die Breite ergibt auch für den Gepäckraum ein grosses Volumen und der Motorraum lässt die Wahl verschiedenster Antriebsaggregate zu, wobei bevorzugt ein solches Antriebsaggregat verwendet wird, das die Breite gut ausnützt und dadurch in der Länge wenig Raum benötigt. Als Antrieb kann z.B. ein Verbrennungsmotor von ca. 1000-1500 cm³ Inhalt vorgesehen sein, z.B. als 4-Zylinder-Reihenmotor, als V4-Motor, als V2-Motor oder als W3-Zylinder-Motor. Vorzugsweise werden die Nebenaggregate des Motors, der vorne quer eingebaut ist, ebenfalls in Querrichtung seitlich am Motor positioniert, so dass sich die erhöhte Breite des Motorraums gut ausnützen lässt. Natürlich kann auch ein Elektromotor oder ein Hybridantrieb vorgesehen sein. Als Getriebe kann ein Automatik- oder Halbautomatikgetriebe vorgesehen sein. Der Antrieb kann auf die Vorderräder und/oder auf die Hinterräder erfolgen. Allfällige Batterien eines Elektroantriebes können, wie dies für den Treibstofftank bei einem Benzin- oder Dieselbetriebenen Aggregat bevorzugt ist, im doppelten Boden angebracht werden. Dies ergibt einen besonders günstigen, tiefliegenden Schwerpunkt und eine gute Verteilung des Fahrzeuggewichtes wird möglich.

Vorzugsweise beträgt der Radstand ca. 1,9 bis 2 Meter. Die Bodenfreiheit bewegt sich im Bereich von 12,5 cm, was für den vorgesehenen Einsatzbereich genügend ist. Bevorzugt wird eine breite Bereifung auf beispielsweise 13"-Felgen. Der Einstieg in das Fahrzeug erfolgt von der Seite her durch Schiebe- oder Schwenktüren. Neben einer Zugangsklappe für den Kofferraum im doppelten Boden kann weiter eine Heckklappe vorgesehen sein, welche den Zugang zu dem Raum hinter den hinteren Sitzen gestattet. Das Reserverad, der Erste Hilfe-Kasten und das Werkzeug werden vorzugsweise innerhalb des doppelten Bodens angeordnet, vorzugweise auf der Beifahrerseite.

Der Aufbau des Fahrzeugs weist eine Rahmenkonstruktion auf, welche mit Kunststoffteilen beplankt wird. Das Fahrzeug wird vorzugsweise so ausgeführt, dass das Fahrzeug eine hohe Steifigkeit aufweist, so dass bei einer Kollision die Fahrgastzelle weitgehend erhalten bleibt. Da keine Knautschzone vorgesehen werden kann, muss die Beschleunigung der Personen bei einem Unfall durch entsprechende Rückhaltesysteme (Gurten, Front-Airbags, Seiten-Airbags) gewährleistet werden.

Vorzugsweise wird eine Wandelbarkeit der Fahrzeugkarosserie vorgesehen, was durch die Konzeption mit einem Rahmen und einer Beplankung mit Karosserieelementen erleichtert wird. Für die Grundstruktur muss dabei eine ausreichende Steifigkeit und Festigkeit vorgesehen werden. Es lässt sich dann, wie an sich bereits bekannt, auf dieser Grundstruktur durch die Auswechslung von Karosserieelementen eine Limousine, ein Cabriolet, ein Kombiwagen oder ein Pick-up realisieren.

Der Zugang zum Fahrzeug erfolgt, wie bereits erwähnt, vorzugsweise durch beidseitig angeordnete vordere Schiebetüren. Die Schiebetüren können sich auch halbautomatisch oder automatisch öffnen. Vorzugsweise erfolgt die Oeffnung über mindestens die Hälfte der Fahrzeuglänge. Die Türen können dabei so ausgestaltet sein, dass sie in geschlossenem Zustand einen Teil des Fahrzeugrahmens bilden und damit die auf das Fahrzeug einwirkenden Kräfte aufnehmen.

Für den Motorraum kann eine Zugänglichkeit durch eine Klappe von vorne realisiert sein. Es ist auch möglich, den Motor ähnlich einer Schublade nach vorne zu ziehen, um diesen für Servicearbeiten gut zugänglich zu machen. Ferner könnte es auch vorgesehen sein, dass ein grösserer Karosserieteil nach oben geschwenkt werden kann, um zum Motor und den Aggregaten Zugang zu haben.

Die bereits erwähnte Klappe über den vom Heck her zugänglichen Kofferraum kann auch so ausgestaltet sein, dass sie zusammen mit einer Zugangsklappe zum Heckbereich des Fahrzeugraumes ein einziges Teil bildet. Auf diese Weise öffnet sich der hintere Fahrzeugteil komplett nach oben oder seitlich. Der Kofferraum kann, wie bereits erwähnt, sich bis nach vorne erstrecken und so für lange Teile, z.B. Skis, genutzt werden. Der verlängerte Kofferraum wird vorzugsweise auch von der Seite her zugänglich gestaltet, z.B. von der Beifahrerseitentür her.

An dem Fahrzeug können alle bekannten Komfortmerkmale vorgesehen werden, insbesonders, da es sich ja nicht um ein reines Kurzstrecken- und Stadtfahrzeug handelt, sondern um ein komfortables Fahrzeug für den Regionalverkehr. So kann z.B. ein Schiebedach oder es können mehrere Schiebedächer vorgesehen sein, wobei sich die Schiebedachplatten ineinander verschieben können und als Windabweiser wirken können. Als Einparkhilfe können Abstandsmelder vorgesehen sein oder es können Abstandsmelder für die Fahrt vorgesehen sein, welche den Abstand zu dem vorherfahrenden oder nachfolgenden Fahrzeug bestimmen. Es kann ein integriertes Abschleppseil vorgesehen sein. Ein im Fahrzeug angeordneter Computer kann neben einer Funktionskontrolle auch die Funktion einer Strassenkarte mit Leitsystem oder eines Stadtplans mit Leitsystem übernehmen, wobei in diesem Fall die entsprechende Infrastruktur mit Satelittenpositionsempfänger und Wegerfassung des Fahrzeugs vorgesehen ist. Als Rückfahrhilfe kann z.B. eine Fernsehkamera und ein Monitor vorgesehen sein. Natürlich kann das Fahrzeug auch mit Telefon und Faxgerät, mit Fernseher, mit Kühlschrank und mit Klimaanlage ausgerüstet sein.

Das beschriebene neuartige Fahrzeug schränkt also weder die Personenzahl noch die Zuladung stark ein. Durch die Abweichung von den üblichen Grössen verringert sich aber der Platzbedarf des Fahrzeugs wesentlich. Bei einer Länge von maximal 2,5 Metern kann das Fahrzeug quer auf herkömmlichen Parkflächen parkieren. Durch die Breite wird trotzdem eine geräumige Fahrgastzelle erhalten, welche 4-6 Personen ohne weiteres aufnehmen kann. Durch die Höhe wird ein doppelter Boden möglich, der Stauraum unter den Sitzflächen ermöglicht, .dies für den Kofferraum, der sich zum Teil auf die ganze Fahrzeuglänge erstrecken kann, aber auch für den Motor, die Nebenaggregate, den Tank, das Ersatzrad, usw.

Durch die kompakte Bauart wird das Fahrzeug leichter und es ermöglicht einen geringen Verbrauch.

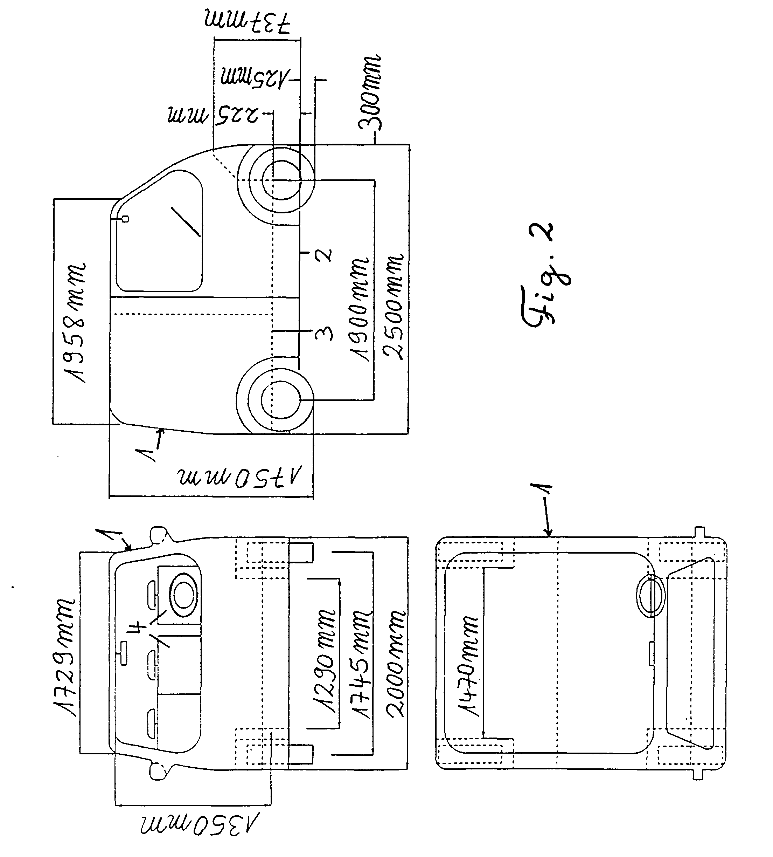

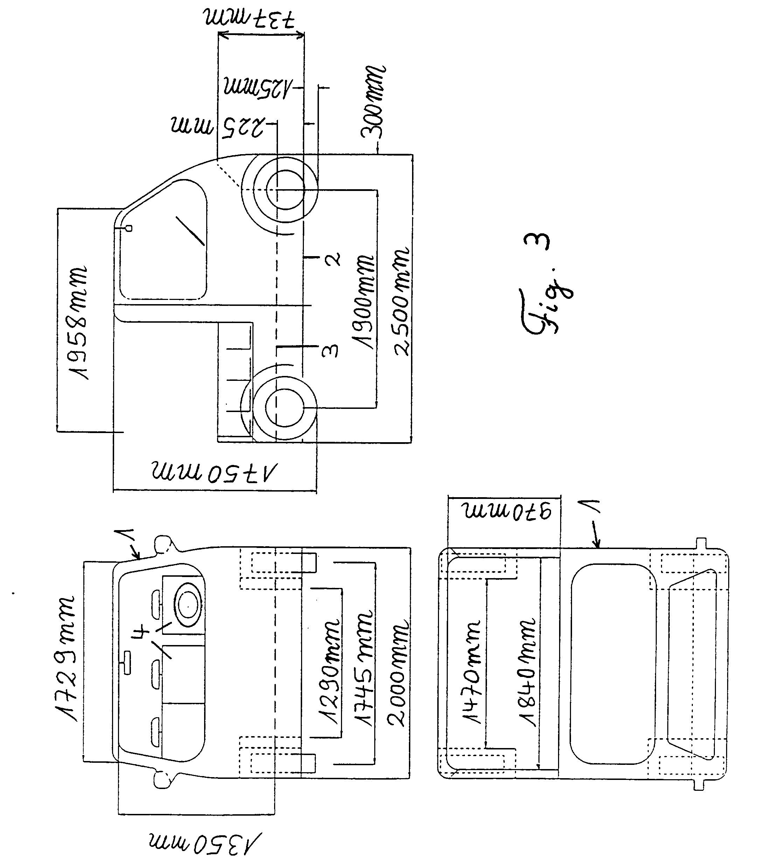

Figur 2 zeigt dasselbe Konzept für einen kleinen Lieferwaren. Figur 3 zeigt einen Pick-up mit offener Ladepritsche, welcher ebenfalls gemäss dem neuen Konzept ausgebildet ist. Natürlich sind die in den Figuren 2 und 3 gezeigten Massangaben ebenfalls nur als Beispiel zu verstehen. Die Länge, obwohl beispielsweise nur 2,5 Meter betragend, kann natürlich auch ca. 2,6 oder ca. 2,7 Meter betragen. Die Breite, welche bevorzugterweise bis 2,0 Meter beträgt, kann ebenfalls in einem gewissen Bereich variiert werden. So kann die Breite bei ca. 1,95 Meter oder ca. 1,90 Meter oder sogar - wie eingangs erwähnt - bei der Breite eines herkommlichen Luxusfahrzeuges liegen, also ca. 1,8 - 1,9 Meter betragen. Bevorzugt ist z.B. eine Länge von 2,6 - 2,7 Metern bei einer Breite von ca. 1,95 Metern. Die Höhe beträgt z.B. ca. 1,85 Meter. Da die Karosserie im Bereich der Rückspiegel einen Einzug aufweisen kann, ergibt sich durch die Rückspiegel nicht unbedingt eine zusätzliche Verbreiterung. Dies gilt auch für die Höhe. Massgeblich ist aber, dass das Längen- und Breitenverhältnis deutlich von herkömmlichen Fahrzeugen abweicht, da bei geringer Aussenlänge des Fahrzeugs eine grosse Aussenbreite vorgesehen ist.

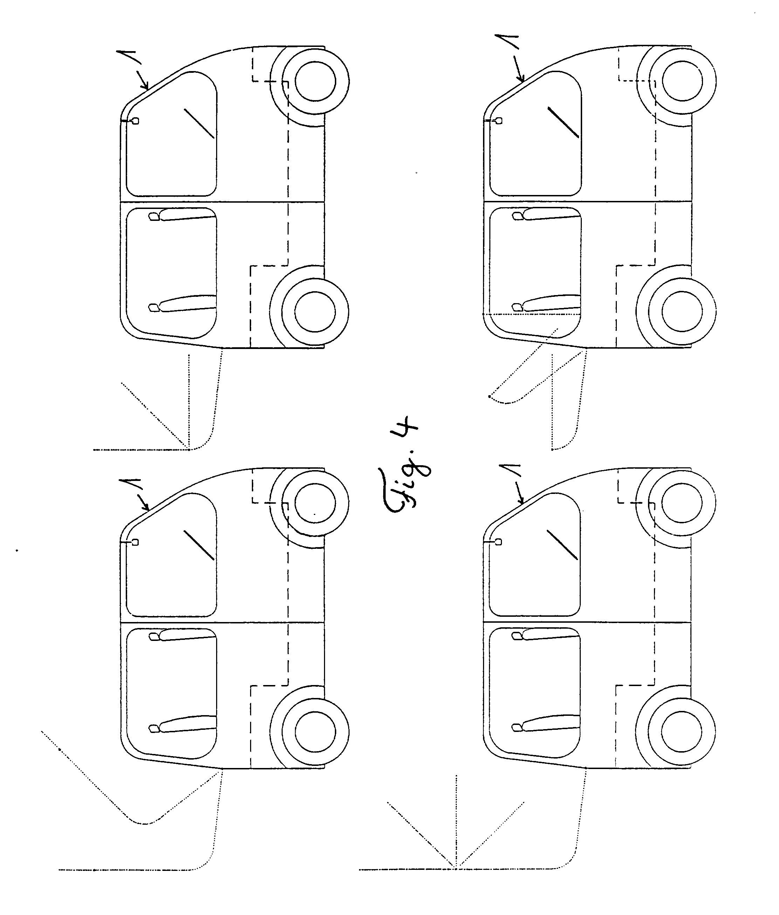

Selbiges gilt auch für das in Figur 4 in vier Seitenansichten gezeigte Cabriolet, wobei sich die vier gezeigten Cabriolets durch die Art und Weise der öffenbaren, falt- oder zusammenlegbaren Dachpartie unterscheiden, wie dies in der Figur schematisch durch verschiedene Dachstellungen in gestrichelter Darstellung ersichtlich ist. Im fertig geöffneten Zustand sind die Dachteile z.B. hinter den Sitzen oder im Bereich des doppelten Bodens angeordnet.

## Patentansprüche

1. Kraftfahrzeug mit einer Länge im Bereich von 2,5 bis 2,7 m, dadurch gekennzeichnet, dass dessen Breite mindestens 1,8 m beträgt und dass es auf mindestens einem Teil der Länge einen doppelten Boden aufweist mit einer unteren Bodenplatte (2) und einer oberen inneren Bodenplatte (3) des Passagierraums und wobei Fahrzeug-Aggregate im doppelten Boden angeordnet sind und dass der Fahrzeugaufbau eine Rahmenkonstruktion aufweist, welche mit Kunststoffteilen beplankt ist.

2. Kraftfahrzeug nach Anspruch 1, dadurch gekennzeichnet, dass dessen Breite 1.8 bis 1.9 Meter beträgt.

3. Kraftfahrzeug nach Anspruch 1 oder 2, dadurch gekennzeichnet, dass die Höhe ab Boden annähernd der Breite entspricht.

4. Kraftfahrzeug nach einem der vorangehenden Ansprüche, dadurch gekennzeichnet, dass die obere innere Bodenplatte (3) abgestuft ist und im mittleren Bereich des Fahrzeugs tiefer liegend und im vorderen und/oder hinteren Bereich höher liegend ausgebildet ist.

5. Kraftfahrzeug nach einem der vorangehenden Ansprüche, dadurch gekennzeichnet, dass der Raum zwischen oberem (3) und unterem Boden (2) zugänglich ist.

6. Kraftfahrzeug nach einem der vorangehenden Ansprüche, dadurch gekennzeichnet, dass der Motor und die Nebenaggregate im wesentlichen in einer Reihe liegend im Vorderbereich des Fahrzeugs quer angeordnet sind.

7. Kraftfahrzeug nach einem der vorangehenden Ansprüche, dadurch gekennzeichnet, dass der Antrieb zwischen dem oberen (3) und dem unteren Boden (2) angeordnet ist.

8. Kraftfahrzeug nach einem der vorangehenden Ansprüche, dadurch gekennzeichnet, dass ein Treibstofftank und/oder Stromspeicherelemente zwischen dem oberen (3) und dem unteren Boden (2) angeordnet sind.

9. Kraftfahrzeug nach einem der vorangehenden Ansprüche, dadurch gekennzeichnet, dass mindstens vier Plätze vorgesehen sind.

10. Kraftfahrzeug nach einem der vorangehenden Ansprüche, dadurch gekennzeichnet, dass es als Limousine oder Cabriolet oder Transporter oder Pick-up ausgestaltet ist, wobei vorzugsweise durch den Austausch von Karosserieteilen an einer Grundstruktur eine Wandelbarkeit zwischen den Fahrzeugtypen besteht.

## Claims

1. A motor vehicle with a length in the range of 2.5 to 2.7 meters, characterized in that its width is at least 1.8 meters and that it includes a double floor along at least a part of its length with a lower floor plate (2) and an upper inner floor plate (3) of the passenger space and in that vehicle aggregates are located in the double floor and in that the vehicle construction features a frame structure with a skin sheeting of plastic parts.

2. The motor vehicle of claim 1, characterized in that its width amounts to 1.8 to 1.9 meters.

3. The motor vehicle of claim 1 of 2, characterized in that the height measured from its bottom corresponds approximately to its width.

4. The motor vehicle of one of the preceding claims, characterized in a stepped upper inner floor plate (3) which is arranged on a lower level in the centre part of the vehicle and is arranged on a higher level in the front and/or rear part.

5. The motor vehicle according to one of the preceding claims, characterized in that the space between the upper (3) and lower floor (2) is accessible.

6. The motor vehicle according to one of the preceding claims, characterized in that the motor and the auxiliary aggregates are arranged substantially in one line laterally in the front area of the motor vehicle.

7. The motor vehicle according to one of the preceding claims, characterized in that the drive is located between the upper (3) and lower floor (2).

8. The motor vehicle according to one of the preceding claims, characterized in that a fuel tank and/or electric power storage elements are located between the upper (3) and lower floor (2).

9. The motor vehicle according to one of the preceding claims, characterized in that at least four seats are foreseen.

10. The motor vehicle according to one of the preceding claims, characterized in that it is designed as limousine or convertible or transporter or pickup, whereby preferably an exchangeability between the vehicle types exists by an exchanging of parts of the body.

## Revendications

1. Véhicule automobile d'une longueur située dans une plage de 2,5 à 2,7 m, caractérisé en ce que sa largeur est d'au moins 1,8 m, en ce qu'il comprend sur au moins une partie de sa longueur un double plancher avec une plaque de plancher inférieure (2) et une plaque de plancher supérieure (3) à l'intérieur de l'habitacle pour les passagers, des éléments moteurs du véhicule étant disposés dans le double plancher, et en ce que la carrosserie du véhicule comprend une structure à portique qui est recouverte de pièces en matière plastique.

2. Véhicule selon la revendication 1, caractérisé en ce que sa largeur est de 1.8 à 1.9 m.

3. Véhicule selon la revendication 1 ou 2, caractérisé en ce que la hauteur à partir du sol correspond approximativement à la largeur.

4. Véhicule selon l'une des revendications précédentes, caractérisé en ce que la plaque de plancher supérieure intérieure (3) est étagée et en ce qu'elle est disposée plus bas dans la zone centrale du véhicule et plus haut dans la zone avant et/ou arrière.

5. Véhicule selon l'une des revendications précédentes, caractérisé en ce que le volume entre le plancher supérieur (3) et le plancher inférieur (2) est accessible.

6. Véhicule selon l'une des revendications précédentes, caractérisé en ce que le moteur et les équipements auxiliaires sont disposés essentiellement en une seule ligne et transversalement dans la partie avant du véhicule.

7. Véhicule selon l'une des revendications précédentes, caractérisé en ce que le mécanisme propulseur est disposé entre le plancher supérieur (3) et le plancher inférieur (2).

8. Véhicule selon l'une des revendications précédentes, caractérisé en ce qu'un réservoir de carburant et/ou des éléments d'accumulation de courant sont disposés entre le plancher supérieur (3) et le plancher inférieur (2).

9. Véhicule selon l'une des revendications précédentes, caractérisé en ce qu'au moins quatre places sont prévues.

10. Véhicule selon l'une des revendications précédentes, caractérisé en ce qu'il est conçu comme limousine ou cabriolet ou comme véhicule utilitaire ou pick-up, une interchangeabilité entre les types de véhicule étant obtenue de préférence par l'échange de pièces de carrosserie sur une structure de base.
